# EUROPEAN PATENT APPLICATION

(11) **EP 4 607 622 A1**
(43) Date of publication of application: **27.08.2025**
(21) Application number: 24878568.5
(22) Date of filing: 08.07.2024
(51) Int. Cl.: H01M 4/58, H01M 4/136, H01M 10/054

(54) **DOPED POLYANION MATERIAL, AND PREPARATION METHOD THEREFOR AND USE THEREOF**

(30) Priority: 18.10.2023 CN 202311351867
(71) Applicant: Natfound Technology Co., Ltd., Yueyang, Hunan 414000 (CN)
(72) Inventor: TU, Jian, Yueyang, Hunan 414000 (CN); XU, Xiongwen, Yueyang, Hunan 414000 (CN)
(74) Representative: Petraz, Gilberto Luigi
(86) International application number: PCT/CN2024/104195
(87) International publication number: WO 2025/081915

(57) **Abstract**

The present invention discloses a doped polyanion material, a preparation method therefor, and use thereof. The doped polyanion material of the present invention has a chemical formula of Na₄₊ₓMₓFe₃₋ₓ(PO₄)₂P₂O₇, where M is a monovalent cation and is doped at a Fe position, and 0.03 ≤ x ≤ 0.3.In the doped polyanion material of the present invention, a bivalent element Fe is partially substituted by the monovalent cation M, which not only can reduce a band gap to increase the electronic conductivity of the polyanion material and improve the electrochemical activity of the polyanion material, thus enhancing the specific capacity and rate capability of the polyanion material; but also can effectively increase the Na content in the interstitial site of the polyanion material such that the Na content in Na₄₊ₓMₓFe₃₋ₓ(PO₄)₂P₂O₇ is greater than 4 to obviously accelerate the diffusion of Na ions, thereby significantly improving the rate capability of the polyanion material; and the lattice distortion of the polyanion material during sodium removal can be further inhibited to enhance the cyclic stability of the polyanion material.

## Description

### TECHNICAL FIELD

The present invention relates to the technical field of methods or apparatuses for the direct transformation of electric energy into chemical energy, and more specifically relates to a doped polyanion material, a preparation method therefor and use thereof.

### BACKGROUND

Currently, lithium-ion batteries represented by lithium iron phosphate play a leading role in energy storage batteries; but due to limited resources of lithium, it is hard to satisfy the demands for the rapid development of automobile electrification. Compared with the lithium-ion batteries, sodium-ion batteries are rich in resources and have other advantages and thus, are more suitable for large-scale energy storage. The positive-electrode material of the sodium-ion battery is a key factor to restrict the performance of the battery. Currently, substances suitable as the positive-electrode materials of sodium-ion batteries mainly include layered oxides, Prussian materials, polyanion materials, etc. With the features of stable structure, long cycle life, high thermal stability, and high operating voltage, the polyanion materials are more suitable as the positive-electrode materials of the sodium-ion batteries.

Polyanionic positive-electrode materials are mainly divided into vanadium-based polyanion materials and iron-based polyanion materials. Due to the advantages such as abundant valence states of vanadium (V²⁺, V³⁺, V⁴⁺, or V⁵⁺), high redox potential, rapid diffusion of sodium ions, and stable structure, the vanadium-based polyanion materials have been concerned extensively. However, the high price and toxicity of vanadium result in the higher costs of sodium-ion batteries, thus leading to the failure of large-scale application. Compared with vanadium-based polyanion materials, the iron-based polyanion materials not only have a higher theoretical capacity, moderate working voltage, but also have three-dimensional diffusion paths of sodium ions as well as a stable structure constructed by special phosphate and pyrophosphates groups and thus, have excellent cycle performance. However, due to low electronic conductivity and lattice distortion accompanied in the charging-discharging process, it leads to a poor rate capability and poor cycle performance of sodium-ion batteries.

Currently, the aforesaid problem is mainly solved by methods such as cation doping, carbon layer coating, and particle refining and granulation. For example, the prior art discloses a positive-electrode material and a preparation method therefor; a ternary metal (NiₓCo_{y}Mn_{z}) in a ternary nickel-cobalt-manganese precursor material is doped into lithium iron phosphate in a cationic form via high-temperature sintering to replace the position of element Fe, thus enhancing ionic conductivity and improving the ion migration rate in materials. Meanwhile, an organic carbon source is deposited on the surface of materials, and subjected to high-temperature pyrolysis and carbonization to form an amorphous carbon coating layer to enhance the electronic conductivity of the materials, thus improving the rate capability of sodium-ion batteries. However, the method could hardly effectively inhibit the lattice distortion during charging and discharging processes, resulting in poor cyclic stability of sodium-ion batteries.

### SUMMARY

The objective of the present invention is to overcome the defects and shortcomings of the existing iron-based polyanionic positive-electrode materials, i.e., difficulties in possessing high rate capability and high cyclic stability; hence, provided is a doped polyanion material.

Another objective of the present invention is to provide a method for preparing a doped polyanion material.

A further objective of the present invention is to provide a positive-electrode plate with the doped polyanion material or use in a sodium-ion battery.

A still further objective of the present invention is to provide a positive-electrode plate containing the aforesaid doped polyanion material.

A still further objective of the present invention is to provide a sodium-ion battery containing the aforesaid doped polyanion material.

The aforesaid objectives of the present invention are achieved by the following technical solution:
The present invention seeks protection for a doped polyanion material having a chemical formula of Na₄₊ₓMₓFe₃₋ₓ(PO₄)₂P₂O₇, where M is a monovalent cation and is doped at a Fe position, and 0.03 ≤ x ≤ 0.3.

Through research, it has been found by the inventor that a bivalent element Fe is partially substituted by a monovalent cation M (a metal ion or non-metal ion available), which is not only beneficial to reducing a band gap to enhance the electronic conductivity of the polyanion material and improve the electrochemical activity of the polyanion material, thus enhancing the specific capacity and rate capability; but also can effectively increase the Na content in the interstitial site of the polyanion material such that the Na content in Na₄₊ₓMₓFe₃₋ₓ(PO₄)₂P₂O₇ is greater than 4 to obviously accelerate the diffusion of Na ions, thereby significantly improving the rate capability of the polyanion material; and the lattice distortion of the polyanion material during sodium removal can be inhibited to enhance the cyclic stability.

Optionally, the value range of x in the Na₄₊ₓMₓFe₃₋ₓ(PO₄)₂P₂O₇ is 0.03-0.15, and specifically may be 0.03, 0.05, 0.07, 0.09, 0.1, 0.13, or 0.15.

Optionally, the M is one or more of Li⁺, K⁺, Rb⁺, Cs⁺, Cu⁺, Ag⁺, or NH₄⁺. Preferably, the M is at least two of Li⁺, K⁺, Rb⁺, Cs⁺, Cu⁺, Ag⁺, or NH₄⁺.

In the meantime, studies have found that when the doping element M contains Li, Li^{I}-O has a bond length the same as that of Fe^{II}-O such that Li is facilitated to get into lattices of Na₄₊ₓMₓFe₃₋ₓ(PO₄)₂P₂O₇ and be distributed evenly; moreover, during charging-discharging processes, the valence state of Li⁺ is kept same such that the octahedral structure of Fe(Li)O₆ may be stabilized to achieve the effect of stabilizing lattices, thereby improving the cyclic stability of the polyanion material. Therefore, the M is preferably at least two of Li⁺, K⁺, Rb⁺, Cs⁺, Cu⁺, Ag⁺, or NH₄⁺, and one of them is Li⁺.

Specifically, the doped polyanion material is an orthorhombic crystal structure, where element M is distributed into lattices evenly, and elements M and O exhibit octahedral coordination.

The present invention further seeks protection for a method for preparing the aforesaid doped polyanion material, including the following steps:
sintering a presintered product in an inert atmosphere under a condition of 250-400°C for 2-8 h first, and then performing calcination in an inert atmosphere under a condition of 450-600°C for 5-15 h, to obtain the doped polyanion material;
where the presintered product is prepared from a phosphorus source, a sodium source, an iron source, a carbon source, and an M source via a sol-gel method, a spray drying method, or a direct solid-phase reaction method.

Specifically, the phosphorus source may be one or more of sodium dihydrogen phosphate, ammonium dihydrogen phosphate, sodium pyrophosphate, disodium hydrogen phosphate, or phosphoric acid; the sodium source may be one or more of sodium oxide, sodium hydroxide, sodium carbonate, sodium nitrate, or sodium citrate; the iron source may be one or more of ferric nitrate, iron trioxide, ferric oxalate, ferroferric oxide, or ferric acetate; the carbon source may be one or more of citric acid, oxalic acid, glucose, fructose, or starch; and the M source may be a salt and/or an oxide of the element M.

Optionally, the inert atmosphere may be an argon atmosphere or a nitrogen atmosphere; after being calcinated, the doped polyanion material may be crushed and sieved according to the practical requirements to obtain a proper particle size, and may be further demagnetized.

Optionally, the presintered product may be prepared by a sol-gel method, specifically including the following steps: dissolving ammonium dihydrogen phosphate, sodium nitrate, ferric nitrate, citric acid (used as a complexing agent, a carbon source, and a reducing agent simultaneously), and a nitrate of element M (e.g., LiNO₃) into deionized water, and stirring to form a sol, and then stirring the sol under a certain temperature condition (60-90°C) to form a gel, and drying the gel for water removal to obtain the presintered product.

Optionally, the presintered product may be also prepared by a spray drying method, specifically including the following steps: mixing sodium dihydrogen phosphate, ferric nitrate, a nitrate of element M (e.g., lithium nitrate), ammonium dihydrogen phosphate, and a water-soluble organic matter (e.g., oxalic acid, citric acid, or glucose, etc., used as a carbon source and reducing agent simultaneously) well by sand milling, where the sand milling rotary speed is generally set at 1000-2000 rpm and the sand milling time is generally 1-10 h, and then spray drying sand-milled slurry to obtain the presintered product.

Optionally, the presintered product may be further prepared via a direct solid-phase reaction method, specifically including the following steps: ball-milling (dry ball milling or wet ball milling, the effect of the ball milling is to improve the homogeneity of a mixture; wet ball milling is preferred; absolute ethyl alcohol, acetone, etc. serve as a ball milling medium; the ball-milling rotary speed is generally set as 300-500 rpm, and the ball-milling time is generally 5-15 h) and mixing sodium carbonate, ferrous oxalate, an oxalate of element M (e.g., lithium oxalate), ammonium dihydrogen phosphate, and a water-soluble organic matter (e.g., oxalic acid, citric acid, or glucose, etc. used as a carbon source and a reducing agent simultaneously) well, and drying to obtain the presintered product.

Use of the aforesaid doped polyanion material in a positive-electrode plate or a sodium-ion battery also falls within the protection scope of the present invention.

The present invention further seeks protection for a positive-electrode plate, including a current collector and a positive-electrode active material layer disposed on at least one side of the current collector; the positive-electrode active material layer includes the aforesaid doped polyanion material.

The present invention further seeks protection for a sodium-ion battery, including a positive-electrode plate, a negative-electrode plate, an electrolyte (a solid electrolyte or a liquid electrolyte + a separator available) located between the positive-electrode plate and the negative-electrode plate; where the positive-electrode plate includes the aforesaid doped polyanion material.

Compared with the prior art, the present invention has the following advantageous technical effects:
In the doped polyanion material of the present invention, a bivalent element Fe is partially substituted by the monovalent cation M, which is not only beneficial to reducing a band gap to increase the electronic conductivity of the polyanion material and improve the electrochemical activity of the polyanion material, thus enhancing the specific capacity and rate capability of the polyanion material, but also can effectively increase the Na content in the interstitial site of the polyanion material to obviously accelerate the diffusion of Na ions, thereby significantly improving the rate capability of the polyanion material. Moreover, the lattice distortion of the polyanion material during sodium removal can be further inhibited to enhance the cyclic stability of the polyanion material. Furthermore, the optimization and balance among capacity, cyclic stability, and rate capability are achieved via the synergistic effect of multiple ions or ionic groups.

### BRIEF DESCRIPTION OF DRAWINGS

FIG. 1 shows an X-ray diffraction (XRD) pattern of a doped polyanion material in Example 1; and
FIG. 2 shows a charging-discharging curve graph of the doped polyanion material in Example 1.

### DETAILED DESCRIPTION OF EMBODIMENTS

The present invention will be further specified in combination with the detailed embodiments below, but the examples are not construed as limiting the present invention in any form. Raw materials and reagents used in the examples of the present invention are purchased conventionally, unless otherwise specified.

### Example 1

A doped polyanion material has a chemical formula of Na_{4.05}Li_{0.05}Fe_{2.95}(PO₄)₂P₂O₇.

The aforesaid doped polyanion material may be prepared by the following preparation method:
S1, a presintered product was prepared by a spray drying method according to the stoichiometric proportion of the doped polyanion material (Na_{4.05}Li_{0.05}Fe_{2.95}(PO₄)₂P₂O₇); and
S2, the presintered product in the S1 was sintered in a nitrogen atmosphere under a condition of 300°C for 4 h first, and heated up to 500°C, and continuously calcinated for 10 h, to obtain the doped polyanion material;
where, the specific steps of preparing the presintered product by the aforesaid spray drying method were as follows: NaH₂PO₄, NaNO₃, LiNO₃, Fe(NO₃)₃, and citric acid were mixed well by sand milling (the sand milling rotary speed was 1000-2000 rpm and the sand milling time was 1-10 h), and then sand-milled slurry was sprayed-dried to obtain the presintered product.

### Example 2

A doped polyanion material has a chemical formula of Na_{4.1}Li_{0.1}Fe_{2.9}(PO₄)₂P₂O₇.

The aforesaid doped polyanion material may be prepared by the following preparation method:
S1, a presintered product was prepared by a spray drying method according to the stoichiometric proportion of the doped polyanion material (Na_{4.1}Li_{0.1}Fe_{2.9}(PO₄)₂P₂O₇) (the specific preparation method of the presintered product is the same as that in Example 1); and
S2, the presintered product in the S1 was sintered in a nitrogen atmosphere under a condition of 300°C for 4 h first, and heated up to 500°C, and continuously calcinated for 10 h, to obtain the doped polyanion material.

### Example 3

A doped polyanion material has a chemical formula of Na_{4.03}Li_{0.03}Fe_{2.97}(PO₄)₂P₂O₇.

The aforesaid doped polyanion material may be prepared by the following preparation method:
S1, a presintered product was prepared by a spray drying method according to the stoichiometric proportion of the doped polyanion material (Na_{4.03}Li_{0.03}Fe_{2.97}(PO₄)₂P₂O₇) (the specific preparation method of the presintered product is the same as that in Example 1); and
S2, the presintered product in the S1 was sintered in a nitrogen atmosphere under a condition of 300°C for 4 h first, and heated up to 500°C, and continuously calcinated for 10 h, to obtain the doped polyanion material.

### Example 4

A doped polyanion material has a chemical formula of Na_{4.05}K_{0.05}Fe_{2.95}(PO₄)₂P₂O₇.

The aforesaid doped polyanion material may be prepared by the following preparation method:
S1, a presintered product was prepared by a spray drying method according to the stoichiometric proportion of the doped polyanion material (Na_{4.05}K_{0.05}Fe_{2.95}(PO₄)₂P₂O₇) (the specific preparation method of the presintered product is the same as that in Example 1); and
S2, the presintered product in the S1 was sintered in a nitrogen atmosphere under a condition of 350°C for 3 h first, and heated up to 510°C, and continuously calcinated for 11 h, to obtain the doped polyanion material.

### Example 5

A doped polyanion material has a chemical formula of Na_{4.1}K_{0.1}Fe_{2.9}(PO₄)₂P₂O₇.

The aforesaid doped polyanion material may be prepared by the following preparation method:
S1, a presintered product was prepared by a spray drying method according to the stoichiometric proportion of the doped polyanion material (Na_{4.1}K_{0.1}Fe_{2.9}(PO₄)₂P₂O₇) (the specific preparation method of the presintered product is the same as that in Example 1); and
S2, the presintered product in the S1 was sintered in a nitrogen atmosphere under a condition of 350°C for 3 h first, and heated up to 510°C, and continuously calcinated for 11 h, to obtain the doped polyanion material.

### Example 6

A doped polyanion material has a chemical formula of Na_{4.1}K_{0.05}Li_{0.05}Fe_{2.9}(PO₄)₂P₂O₇.

The aforesaid doped polyanion material may be prepared by the following preparation method:
S1, a presintered product was prepared by a spray drying method according to the stoichiometric proportion of the doped polyanion material (Na_{4.1}K_{0.05}Li_{0.05}Fe_{2.9}(PO₄)₂P₂O₇) (the specific preparation method of the presintered product is the same as that in Example 1); and
S2, the presintered product in the S1 was sintered in a nitrogen atmosphere under a condition of 300°C for 4 h first, and heated up to 500°C, and continuously calcinated for 10 h, to obtain the doped polyanion material.

### Example 7

A doped polyanion material has a chemical formula of Na_{4.05}Li_{0.05}Fe_{2.95}(PO₄)₂P₂O₇.

The aforesaid doped polyanion material may be prepared by the following preparation method:
S1, a presintered product was prepared by a sol-gel method according to the stoichiometric proportion of the doped polyanion material (Na_{4.05}Li_{0.05}Fe_{2.95}(PO₄)₂P₂O₇); and
S2, the presintered product in the S1 was sintered in a nitrogen atmosphere under a condition of 300°C for 4 h first, and heated up to 500°C, and continuously calcinated for 10 h, to obtain the doped polyanion material;
where, the specific steps of preparing the presintered product by the aforesaid sol-gel method were as follows: NH₄H₂PO₄, NaNO₃, LiNO₃, Fe(NO₃)₃, and citric acid were dissolved into deionized water, stirred to form a sol, and then stirred under a condition of 80°C to form a gel, and the gel was dried to obtain the presintered product.

### Example 8

A doped polyanion material has a chemical formula of Na_{4.05}Cu_{0.05}Fe_{2.95}(PO₄)₂P₂O₇.

The aforesaid doped polyanion material may be prepared by the following preparation method:
S1, a presintered product was prepared by a spray drying method according to the stoichiometric proportion of the doped polyanion material (Na_{4.05}Cu_{0.05}Fe_{2.95}(PO₄)₂P₂O₇); and
S2, the presintered product in the S1 was sintered in a nitrogen atmosphere under a condition of 320°C for 4 h first, and heated up to 510°C, and continuously calcinated for 10 h, to obtain the doped polyanion material;
where, the specific steps of preparing the presintered product by the aforesaid spray drying method were as follows: NaH₂PO₄, NaNO₃, Cu₂O, Fe(NO₃)₃, and citric acid were mixed well by sand milling (the sand milling rotary speed was 1000-2000 rpm and the sand milling time was 1-10 h), and then sand-milled slurry was sprayed-dried to obtain the presintered product.

### Example 9

A doped polyanion material has a chemical formula of Na_{4.05}Ag_{0.05}Fe_{2.95}(PO₄)₂P₂O₇.

The aforesaid doped polyanion material may be prepared by the following preparation method:
S1, a presintered product was prepared by a spray drying method according to the stoichiometric proportion of the doped polyanion material (Na_{4.05}Ag_{0.05}Fe_{2.95}(PO₄)₂P₂O₇); and
S2, the presintered product in the S1 was sintered in a nitrogen atmosphere under a condition of 320°C for 4 h first, and heated up to 510°C, and continuously calcinated for 10 h, to obtain the doped polyanion material;
where, the specific steps of preparing the presintered product by the aforesaid spray drying method were as follows: NaH₂PO₄, NaNO₃, AgNO₃, Fe(NO₃)₃, and citric acid were mixed well by sand milling (the sand milling rotary speed was 1000-2000 rpm and the sand milling time was 1-10 h), and then sand-milled slurry was sprayed-dried to obtain the presintered product.

### Example 10

A doped polyanion material has a chemical formula of Na_{4.05}Ag_{0.02}Li_{0.03}Fe_{2.96}(PO₄)₂P₂O₇.

The aforesaid doped polyanion material may be prepared by the following preparation method:
S1, a presintered product was prepared by a spray drying method according to the stoichiometric proportion of the doped polyanion material (Na_{4.05}Ag_{0.02}Li_{0.03}Fe_{2.96}(PO₄)₂P₂O₇); and
S2, the presintered product in the S1 was sintered in a nitrogen atmosphere under a condition of 300°C for 4 h first, and heated up to 500°C, and continuously calcinated for 10 h, to obtain the doped polyanion material;
where, the specific steps of preparing the presintered product by the aforesaid spray drying method were as follows: NaH₂PO₄, NaNO₃, AgNO₃, LiNO₃, Fe(NO₃)₃, and citric acid were mixed well by sand milling (the sand milling rotary speed was 1000-2000 rpm and the sand milling time was 1-10 h), and then sand-milled slurry was sprayed-dried to obtain the presintered product.

### Comparative Example 1

A doped polyanion material has a chemical formula of Na₄Fe₃(PO₄)₂P₂O₇.

The aforesaid doped polyanion material may be prepared by the following preparation method:
S1, a presintered product was prepared by a spray drying method according to the stoichiometric proportion of the doped polyanion material (Na₄Fe₃(PO₄)₂P₂O₇); and
S2, the presintered product in the S1 was sintered in a nitrogen atmosphere under a condition of 300°C for 4 h first, and heated up to 500°C, and continuously calcinated for 10 h, to obtain the doped polyanion material;
where the specific steps of preparing the presintered product by the aforesaid spray drying method were as follows: NaH₂PO₄, NaNO₃, Fe(NO₃)₃, and citric acid were mixed well by sand milling (the sand milling rotary speed was 1000-2000 rpm and the sand milling time was 1-10 h), and then sand-milled slurry was sprayed-dried to obtain the presintered product.

### Comparative Example 2

A doped polyanion material has a chemical formula of Na_{4.02}Li_{0.02}Fe_{2.98}(PO₄)₂P₂O₇.

The aforesaid doped polyanion material may be prepared by the following preparation method:
S1, a presintered product was prepared by a spray drying method according to the stoichiometric proportion of the doped polyanion material (Na_{4.02}Li_{0.02}Fe_{2.98}(PO₄)₂P₂O₇); and
S2, the presintered product in the S1 was sintered in a nitrogen atmosphere under a condition of 300°C for 4 h first, and heated up to 500°C, and continuously calcinated for 10 h, to obtain the doped polyanion material;
where the specific steps of preparing the presintered product by the aforesaid spray drying method were as follows: NaH₂PO₄, NaNO₃, LiNO₃, Fe(NO₃)₃, and citric acid were mixed well by sand milling (the sand milling rotary speed of the was 1000-2000 rpm and the sand milling time was 1-10 h), and then sand-milled slurry was sprayed-dried to obtain the presintered product.

### Comparative Example 3

A doped polyanion material has a chemical formula of Na_{4.4}Li_{0.4}Fe_{2.6}(PO₄)₂P₂O₇.

The aforesaid doped polyanion material may be prepared by the following preparation method:
S1, a presintered product was prepared by a spray drying method according to the stoichiometric proportion of the doped polyanion material (Na_{4.4}Li_{0.4}Fe_{2.6}(PO₄)₂P₂O₇); and
S2, the presintered product in the S1 was sintered in a nitrogen atmosphere under a condition of 300°C for 4 h first, and heated up to 500°C, and continuously calcinated for 10 h, to obtain the doped polyanion material;
where the specific steps of preparing the presintered product by the aforesaid spray drying method were as follows: NaH₂PO₄, NaNO₃, LiNO₃, Fe(NO₃)₃, and citric acid were mixed well by sand milling (the sand milling rotary speed of the was 1000-2000 rpm and the sand milling time was 1-10 h), and then sand-milled slurry was sprayed-dried to obtain the presintered product.

### Comparative Example 4

A doped polyanion material has a chemical formula of Na₄Cu_{0.05}Fe_{2.95}(PO₄)₂P₂O₇.

The aforesaid doped polyanion material may be prepared by the following preparation method:
S1, a presintered product was prepared by a spray drying method according to the stoichiometric proportion of the doped polyanion material (Na₄Cu_{0.05}Fe_{2.95}(PO₄)₂P₂O₇); and
S2, the presintered product in the S1 was sintered in a nitrogen atmosphere under a condition of 320°C for 4 h first, and heated up to 520°C, and continuously calcinated for 10 h, to obtain the doped polyanion material;
where the specific steps of preparing the presintered product by the aforesaid spray drying method were as follows: NaH₂PO₄, NaNO₃, Cu(NO₃)₂, Fe(NO₃)₃, and citric acid were mixed well by sand milling (the sand milling rotary speed was 1000-2000 rpm and the sand milling time was 1-10 h), and then sand-milled slurry was sprayed-dried to obtain the presintered product.

### Comparative Example 5

A doped polyanion material has a chemical formula of Na_{3.95}Al_{0.05}Fe_{2.95}(PO₄)₂P₂O₇.

The aforesaid doped polyanion material may be prepared by the following preparation method:
S1, a presintered product was prepared by a spray drying method according to the stoichiometric proportion of the doped polyanion material (Na_{3.95}Al_{0.05}Fe_{2.95}(PO₄)₂P₂O₇); and
S2, the presintered product in the S1 was sintered in a nitrogen atmosphere under a condition of 320°C for 4 h first, and heated up to 510°C, and continuously calcinated for 10 h, to obtain the doped polyanion material;
where the specific steps of preparing the presintered product by the aforesaid spray drying method were as follows: NaH₂PO₄, NaNO₃, Al(NO₃)₃, Fe(NO₃)₃, and citric acid were mixed well by sand milling (the sand milling rotary speed was 1000-2000 rpm and the sand milling time was 1-10 h), and then sand-milled slurry was sprayed-dried to obtain the presintered product.

### Comparative Example 6

A doped polyanion material has a chemical formula of Na₄Mg_{0.05}Fe_{2.95}(PO₄)₂P₂O₇.

The aforesaid doped polyanion material may be prepared by the following preparation method:
S1, a presintered product was prepared by a spray drying method according to the stoichiometric proportion of the doped polyanion material (Na₄Mg_{0.05}Fe_{2.95}(PO₄)₂P₂O₇); and
S2, the presintered product in the S1 was sintered in a nitrogen atmosphere under a condition of 320°C for 4 h first, and heated up to 510°C, and continuously calcinated for 10 h, to obtain the doped polyanion material;
where the specific steps of preparing the presintered product by the aforesaid spray drying method were as follows: NaH₂PO₄, NaNO₃, Mg(NO₃)₂, Fe(NO₃)₃, and citric acid were mixed well by sand milling (the sand milling rotary speed was 1000-2000 rpm and the sand milling time was 1-10 h), and then sand-milled slurry was sprayed-dried to obtain the presintered product.

### Performance test

### (1) X-ray diffraction (XRD) testing

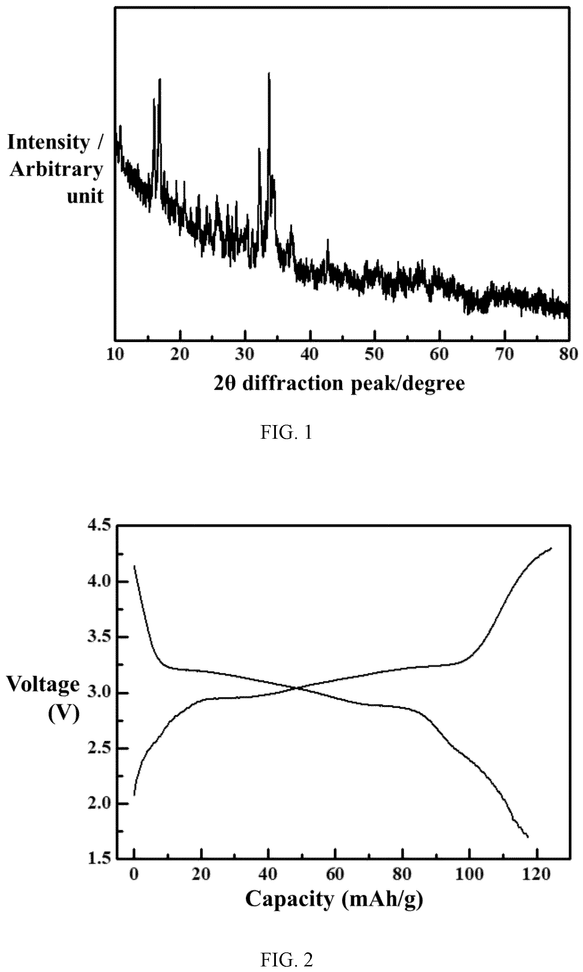

The doped polyanion materials in Examples 1-10 and Comparative Examples 1-6 were subjected to XRD testing. The XRD pattern of the doped polyanion material in Example 1 is shown in FIG. 1. As can be seen from the XRD pattern, the doped polyanion material has an orthorhombic crystal structure. The XRD pattern was analyzed to determine the doping of Li⁺ in the Fe position. The XRD patterns of the doped polyanion materials in Examples 2-9 are similar to that in Example 1, and analyzed to determine the doping of the monovalent cation M in the Fe position.

### (2) Test for electrochemical performance

Each of the doped polyanion materials in Examples 1-10 and Comparative Examples 1-6 served as a positive-electrode material to be made into a positive-electrode plate, respectively; meanwhile, metal sodium served as a negative-electrode plate, glass fiber served as a separator, and a propylene carbonate (PC)/ethyl methyl carbonate (EMC) of 1M NaPF₆ served as an electrolyte solution, with the addition of a fluorinated ethylene carbonate (FEC) being 4% of the aforesaid electrolyte solution in weight; and the above materials were assembled into a button cell for charge-discharge tests at room temperature. The cyclic test conditions are as follows: charge-discharge cycles were performed at a current density of 13 mA/g (0.1C) and a voltage range of 1.7-4.3 V for three times, and the capacity of the cell was evaluated via a capacity of 0.1C; and then charge-discharge cycles were performed under a condition of 1C for 500 times; the cyclic stability of the doped polyanion material was evaluated by the capacity retention ratio after 500 times of charge-discharge cycles. Rate test conditions are as follows: cycles were performed at 0.1C and 1.7-4.3V for 3 times first, and cycles were performed at 1C for 5 times, then cycles were performed at 10C for 5 times. The rate capability of the doped polyanion material was evaluated by the discharge capacity retention ratios under the conditions of 10C and 1C. Test results are shown in Table 1 and FIG. 2. The capacity retention ratio (%) after 500 times of charge-discharge at 1C = capacity at the 500th discharge/capacity at the 1st discharge × 100%; 10C/1C discharge capacity retention ratio (%) = discharge capacity at 10C/discharge capacity at 1C × 100%.

**Table 1 Property of the doped polyanion material in each example and comparative example**

| No. | | Chemical formula of the doped polyanion material | Discharge capacity at 0.1C (mAh/g) | Capacity retention ratio after 500 times of charge-discharge at 1C (%) | 10C/1C discharge capacity retention ratio (%) |
|---|---|---|---|---|---|
| Exa mple | 1 | Na_{4.05}Li_{0.05}Fe_{2.95}(PO₄)₂P₂O₇ | 117.4 | 93 | 85 |
| | 2 | Na_{4.1}Li_{0.1}Fe_{2.9}(PO₄)₂P₂O₇ | 112.8 | 96 | 87 |
| | 3 | Na_{4.03}Li_{0.03}Fe_{2.97}(PO₄)₂P₂O₇ | 118.2 | 91 | 84 |
| | 4 | Na_{4.05}K_{0.05}Fe_{2.95}(PO₄)₂P₂O₇ | 112.4 | 90 | 83 |
| | 5 | Na_{4.1}K_{0.1}Fe_{2.9}(PO₄)₂P₂O₇ | 110.3 | 91 | 81 |
| | 6 | Na_{4.1}K_{0.05}Li_{0.05}Fe_{2.9}(PO₄)₂P₂O₇ | 111.1 | 93 | 85 |
| | 7 | Na_{4.05}Li_{0.05}Fe_{2.95}(PO₄)₂P₂O₇ | 115.2 | 92 | 83 |
| | 8 | Na_{4.05}Cu_{0.05}Fe_{2.95}(PO₄)₂P₂O₇ | 111.5 | 90 | 81 |
| | 9 | Na_{4.05}Ag_{0.05}Fe_{2.95}(PO₄)₂P₂O₇ | 111.2 | 91 | 80 |
| | 10 | Na_{4.05}Ag_{0.02}Li_{0.03}Fe_{2.96}(PO₄)₂P₂O₇ | 113.5 | 92 | 83 |
| Com parat ive Exa mple | 1 | Na₄Fe₃(PO₄)₂P₂O₇ | 105.7 | 83 | 75 |
| | 2 | Na_{4.02}Li_{0.02}Fe_{2.98}(PO₄)₂P₂O₇ | 109.8 | 86 | 78 |
| | 3 | Na_{4.4}Li_{0.4}Fe_{2.6}(PO₄)₂P₂O₇ | 95.2 | 88 | 75 |
| | 4 | Na₄Cu_{0.05}Fe_{2.95}(PO₄)₂P₂O₇ | 106.7 | 84 | 77 |
| | 5 | Na_{3.95}Al_{0.05}Fe_{2.95}(PO₄)₂P₂O₇ | 105.9 | 87 | 79 |
| | 6 | Na₄Mg_{0.05}Fe_{2.95}(PO₄)₂P₂O₇ | 108.4 | 84 | 78 |

As can be seen from the test results of Table 1, as for the sodium-ion battery assembled by the positive-electrode plate made from each of the doped polyanion materials in Examples 1-10 as the positive-electrode material, its capacity is up to 110 mAh/g above at a voltage of 1.7-4.3 V and under the condition of 0.1C. Moreover, after 500 times of charge-discharge under the condition of 1C, its capacity retention ratio is ≥ 90%, and the 10C/1C discharge capacity retention rate is ≥ 80%. It indicates that the doped polyanion material of the present invention has a high capacity, excellent cyclic stability and good rate capability.

As can be seen from the Comparative Example 1, compared with the polyanion material not modified via doping, the doping of a monovalent cation in the Fe position may improve the cyclic stability and rate capability while obviously increasing the capacity of the polyanion material. Moreover, also as can be seen from Comparative Examples 4-5, high capacity, excellent cyclic stability, and good rate capability may be achieved only by doping a monovalent cation in the Fe position, but may not be achieved by doping a divalent or trivalent cation in the Fe position. The reason is as follows: compared with non-doping, divalent or trivalent cation doping, the doping of monovalent cation may increase the concentration of sodium ions at the interstitial site, thus improving the capacity, cyclic stability, and rate capability of the polyanion material. Meanwhile, as can be seen from Comparative Examples 2-3, the doping of monovalent cation is beneficial to the improvement of rate capability and cyclic stability, but will lead to the decline of capacity simultaneously. Too much or too little doping of the monovalent cation is against the obtaining of the polyanion material with high capacity, excellent cyclic stability, and good rate capability. In addition, as can be seen from the charging-discharging curve of FIG. 2, the doped polyanion material in Example 1 has a specific discharge capacity of being up to 117.4 mAh/g and has a smooth charging-discharging curve within the voltage range of 1.7-4.3 V and at a current density of 13 mA/g (0.1C). It indicates that the doped polyanion material not only has a high capacity, but also has excellent cyclic stability.

Obviously, the above examples of the present invention are merely enumerated to specify the present invention clearly, but are not construed as limiting the embodiments of the present invention. Those skilled in the art could further make other different forms of changes or alterations on the basis of the above description. All the embodiments need and could not be enumerated exhaustively hereby. Any amendment, equivalent replacement, improvement, etc. made within the spirit and principle of the present invention shall fall within the protection scope of the claims of the present invention.

## Claims

1. A doped polyanion material, wherein the doped polyanion material has a chemical formula of Na₄₊ₓMₓFe₃₋ₓ(PO₄)₂P₂O₇; wherein M is a monovalent cation and is doped at a Fe position, and 0.03 ≤ x ≤ 0.3.

2. The doped polyanion material according to claim 1, wherein the M is one or more of Li⁺, K⁺, Rb⁺, Cs⁺, Cu⁺, Ag⁺, or NH₄⁺.

3. The doped polyanion material according to claim 2, wherein the M is at least two of Li⁺, K⁺, Rb⁺, Cs⁺, Cu⁺, Ag⁺, or NH₄⁺.

4. The doped polyanion material according to claim 3, wherein the M is at least two of Li⁺, K⁺, Rb⁺, Cs⁺, Cu⁺, Ag⁺, or NH₄⁺, and one of them is Li⁺.

5. The doped polyanion material according to claim 1, wherein the doped polyanion material is an orthorhombic crystal structure.

6. The doped polyanion material according to claim 5, wherein elements M and O exhibit octahedral coordination in the doped polyanion material.

7. A method for preparing the doped polyanion material according to any one of claims 1-6, comprising the following steps:
sintering a presintered product in an inert atmosphere under a condition of 250-400°C for 2-8 h first, and performing calcination in an inert atmosphere under a condition of 450-600°C for 5-15 h, to obtain the doped polyanion material;
wherein the presintered product is prepared from a phosphorus source, a sodium source, an iron source, a carbon source, and an M source via a sol-gel method, a spray drying method, or a direct solid-phase reaction method.

8. Use of the doped polyanion material according to any one of claims 1-6 in a positive-electrode plate or a sodium-ion battery.

9. A positive-electrode plate, comprising a current collector and a positive-electrode active material layer disposed on at least one side of the current collector, wherein the positive-electrode active material layer comprises the doped polyanion material according to any one of claims 1-6.

10. A sodium-ion battery, comprising a positive-electrode plate, a negative-electrode plate, an electrolyte located between the positive-electrode plate and the negative-electrode plate, wherein the positive-electrode plate comprises the doped polyanion material according to any one of claims 1-6.
